# EUROPEAN PATENT APPLICATION

(11) **EP 3 046 342 A1**
(43) Date of publication of application: **20.07.2016**
(21) Application number: 15151308.2
(22) Date of filing: 15.01.2015
(51) Int. Cl.: H04W 4/00, G01C 21/28, G01S 19/48, G08G 1/0962

(54) **Beacon device and its use**

(71) Applicant: SwissSavior AG, 3011 Bern (CH)
(72) Inventor: Juric, Pero, 4513 Langendorf (CH)
(74) Representative: AMMANN PATENTANWÄLTE AG BERN

(57) **Abstract**

A beacon (1) comprises a localisation unit (7) for determining its position and data to be compared with the so determined position. Thereby, the beacon (1) is capable to emit data related to its present position independently of the distance from a point of interest to which the emitted data relate. A preferred application is the use in a vehicle, e.g. a bus, to provide touristic information of points of interest to smartphones and similar devices of the passengers during travel.

## Description

The present invention relates to a beacon device according to the preamble of claim 1. Furthermore, it relates to a use of the device according to the preamble of the first use claim.

A System named iBeacon^{®} has been developed by Apple Inc., Cupertino, for positioning in environments where generally available systems like the global positioning systems (GNSS), like GPS, Glonass, or Galileo, are not available or inappropriate. In particular in buildings, satellite signals can often not be received or the resolution may not be sufficient. An indoor positioning system may serve to announce special sales offers or product information to clients of a store depending on where the client abides.

iBeacon uses autonomous, battery powered beacons which wirelessly transmit each a universally unique identifier (UUID) picked up by a compatible smartphone application using Bluetooth Low Energy (BLE) technology. Bluetooth Low Energy (BLE) allows a sufficient operating time without the need to change the battery albeit allowing small housings of the beacons. A drawback of BLE is the restricted reception range of up to 70 m only as a standard and the restriction of at most 20 regions if the movement of the smartphone is to be watched in the background. A beacon region can be represented by one or more beacons. Per definition of iBeacon, the number of regions that may be simultaneously monitored by a single application is limited to 20. This monitoring can work while a mobile application is running in foreground or background. Mobile Applications can use region monitoring to be notified when a user enters or exits the vicinity of a beacon.

Another possible application of a system of distributed beacons is a system to inform visitors of points of interest on a touristic tour or while travelling by public transport, e.g. a bus. The known system suffers, however, several drawbacks in such an application: The beacon range is too short, particularly in drawing into account that for power management reasons, data are emitted only once each 0.2 to 2 seconds typically, so that the receiver may not stay a sufficient time span within the range of a beacon to notice it and to determine other parameters, e.g. distance, travel direction with respect to the beacon. Using more than one beacon per point of interest may in certain situations mitigate the problem yet will obviously increase costs and maintenance efforts.

Further disadvantages are:
- The number of regions for background surveillance is limited.
- The beacons need battery changes from time to time, which may be particularly awkward if a significant number of beacons is placed in widespread locations.

Similar applications, where position and possibly time dependent data have to be transmitted to moving recipients for information or positioning purposes, may be faced with these problems.

It is an object of the present invention to provide a beacon device which is better suitable to mark remote point of interest.

Such a beacon is defined in claim 1. The further claims propose preferred embodiments and uses of the device.

Hence, it is proposed that a beacon is moved together with the intended addressees and that the beacon can determine its position and emit a signal depending thereof, so that it can furnish appropriate data for a POI in the environment.

For the purpose of the present description and claims, **"position range"** generally indicates an area of a defined extension which may, however, even be reduced to a geographic point, e.g. a longitude and a latitude coordinate value. A prototype of a position range representation is a geographic point and limitations, be it upper, lower, or both, so that it is possible to determine if an object is positioned in the position range (including its perimeter) or not, or other, equivalent definitions of areas. Preferred are point coordinates together with a distance value relative to the point in order to define a circular area of the given distance value as the radius and the point as the centre.

**Distance from a position range** relates to the shortest distance between the perimeter of the position range and a given position or position range where the definition applies vice versa. However, if so declared, the distance may also refer to the centre of a position range.

A **centre of a position range** is generally the centre of gravity of the area defined by the position range.

The invention will be further explained by way of an exemplary preferred embodiment with reference to the Figures:
- Fig. 1: Block circuit of a beacon according to the invention; and
- Fig. 2: Scheme of a bus tour.

A beacon 1 comprises a central processing unit (CPU) 3 connected to a memory 5. Usually, the memory 5 comprises writable and read-only portions. Writable portions serve the purpose to store changing data (variables), read-only parts are preferred for constant data and software. In general, CPU 3 and memory 5 constitute the essential parts of a computer, namely processing unit (CPU) 3 and data and program storage (memory) 5. Preferably, storage is provided by a non-volatile memory to maintain persistent data in case of power failure, e.g. low battery condition.

The CPU 3 is operatively connected to a positioning unit 7, like a GPS receiver, and a data transmitter 9. Each of the positioning unit 7 and the data transmitter 9 are connected to an antenna 11 and 15 respectively. Antennae 11 and 15 may be separate or a single device, as required with appropriate provisions like frequency splitters so that signals of or from the positioning unit 7 and the data transmitter 9 do not interfere. The positioning unit 7 is generally arranged to determine the present position of the beacon 1. Preferably, it determines the position by means of the GPS (global positioning system) or another satellite based positioning system, or more generally any accessible wireless positioning system. Another possibility is to use the locations of mobile phone transmitters in the environment.

Data transmitter 9 is a data transmitter for wireless data transfer, preferably one which implements the Bluetooth low energy marketed also as Bluetooth Smart (cf. https://www.bluetooth.org/en-us/marketing/bluetooth-smart-technology). However, it may use other wireless data transfer techniques, possible even using light or other electromagnetic radiation. A data transfer technique is preferred which is regularly implemented in the intended receivers like smartphones, tablets etc., in general computer-like portable devices. The transfer technique may even be capable to exchange data in a bidirectional manner, f. i. to adapt the transmitted data to the receiver or to furnish complementary data on request.

A functionally essential part of the data stored in memory 5 consists in the configuration parameters 17. They contain data sets which are assigned to locations or merely certain areas, i.e. ranges of coordinates. Further assignment parameters may exist, e.g. the direction of movement. F. i. two data sets for the same location may be defined, yet one of each is emitted if the beacon moves in a first direction (toward a POI; or West to East), the other data set is activated if the movement occurs in the opposite (or generally another) direction. Another parameter may be the speed. Of course more than two data sets may be assigned to a location and the assignment may be overlapping. Usually in a given situation a data set is unambiguously assigned, yet multiple assignments, i.e. two, three or more data sets, may be contemplated. The data sets will be emitted e.g. sequentially, using different interfaces, on different frequencies, or in an intertwined manner, provided that the receiver can still distinguish them.

The beacon, or a number of such beacons, may be arranged in a certain space so that receivers can receive the data signal and even exchange data as necessary and provided for. Such a space may be a bus circulating on a scenic tour. The beacon is arranged in the bus so that its signal can be well received by the receiver devices of the passengers.

The beacon 1 may emit its signal on a regular basis, e.g. once per 0.1 s, 0.2 s, 0.3 s, 0.5 s, 1 s, or even less frequently, or in any time distance from 0.1 to 10 s, and by an emission power of at most 0.01 W or even only 0.001, 0.0001, 0.00001, or 0.000001 W at most with increasing preference. Emission rate and emission power can be selected according to applicable requirements and, in particular regarding the rate, to momentary conditions.

The beacon 1 once activated continuously determines its position and emits data signals depending on the position. According to iBeacon, the data signal contains three identifiers: an universal unique identifier (UUID), major and minor values. Depending on the data, the receivers will directly display or play them or retrieve information to be played back in using the data for identifying the correct position dependent information. The data may be retrieved from a remote server, e.g. via the Internet or another wireless data service, or from the beacon itself. For this purpose, the beacon may be further provided with the components required for appearing as a server, more preferably a web server or data server, with capability to wirelessly connect to the receivers, and to furnish information of the POIs as requested by the receivers.

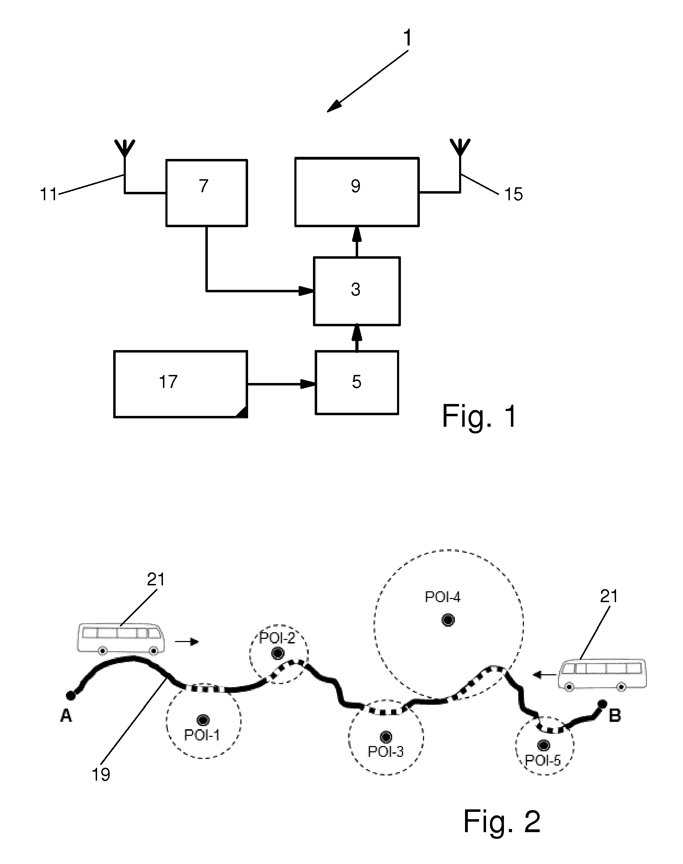

Figure 2 shows such a route 19 starting at point A, passing five points of interest POI-1 to POI-5, and ending at point B. When bus 21 arrives at B, it returns to A. In bus 21, a beacon 1 is arranged. The beacon 1 contains the table below as part of its configuration parameters 17 in its Flash memory 5 as a non-volatile data memory.

**Table 1**

| **Route id** | **Latitude** | **Longitude** | **Distance (km)** | **Major** | **Minor-L** | **Minor-R** |
|---|---|---|---|---|---|---|
| 1 | 46.943435 | 7.432796 | 0.3 | 130 | 1 | 11 |
| 1 | 46.948921 | 7.439936 | 0.3 | 130 | 2 | 12 |
| 1 | 46.953576 | 7.458470 | 0.3 | 130 | 3 | 13 |
| 1 | 46.957237 | 7.468102 | 0.3 | 130 | 4 | 14 |
| 1 | 46.953445 | 7.448569 | 0.3 | 130 | 5 | 15 |
| 1 | 47.002376 | 7.440693 | 0.3 | 130 | 6 | 16 |
| 1 | 46.967980 | 7.464605 | 0.3 | 130 | 7 | 17 |

The table may be stored in an invariable storage means, like a ROM (read-only memory). Preferably, it is stored in a non-volatile, yet rewritable device. Rewriting may be done by cable, or more conveniently by wirelessly, e.g. by using the already present BLE unit.

A route id (here: 1) serves the purpose to distinguish different routes. If the beacon is installed in another bus, or the bus serves another route, the route id is changed. Furthermore, the route id may even depend on time. E.g. at times of reduced visibility, data records of another route id may be used.

Once beacon 1 determines that it is within a distance of a location contained in the configuration parameters (in the table defined by the content of columns distance; latitude, longitude) it emits a corresponding UUID. The smartphones of passengers which are interested in being informed retrieve information assigned to the UUID from a predetermined data source, be it a remote server accessible by the Internet and mobile internet access, be it data previously retrieved and stored in the smartphone for this route. Normally, the UUID is constructed from fixed data assigned for the device, the bus, or the tour. The position dependent parts are the so-called major and minor codes. For the latter, two series "L" (for left) and "R" (for right) are provided. They are used depending on if the POI is located to the left or to the right of the bus.

Using a UUID instead of an arbitrary chosen, proprietary code, allows to access a universal data base of locations or POIs and to identify the POI or location by that code. Furthermore, such a universal data base may even provide the explanations in different languages. The language may, f. i., be chosen by the receiver (smart phone, pad computer, portable computer, multimedia device).

In the present example, the beacon may easily decide if L or R data are appropriate by determining if the first or last position in the table is the first POI it approaches after the bus started its tour.

The beacon 1 sends its default UUID in case there is no GPS signal coverage or it is outside the position ranges defined in table 1. The default UUID is permanently stored and preferably unique.

The advantages of the beacons according to the preferred embodiment are the following, among others:
- Instead of at least one beacon per POI, only one beacon per group of potentially interested persons, (passengers of a vehicle, tourist groups moving collectively) is required.
- Power supply by a locally available power supply system (e.g. of a vehicle) is possible.
- Emission range, hence power consumption, can be reduced as the maximal distance of intended receivers is limited.
- The distance between a POI and a beacon is of no importance, i.e. the POI range is unlimited.
- Generally only one beacon is required per tour or route.
- Information can be rendered sufficiently timely before a POI is reached in taking into account the speed of approaching and the direction of movement.
- The beacons return regularly to a certain point where maintenance (e.g. exchange or recharge of power supply, data update) and reprogramming is easily feasible.

From the foregoing description, the one skilled in the art may derive alternatives and modifications without leaving the scope of the invention which is defined by the claims. For example, the following modifications or additional measures are perceivable:
- Determining a POI: The list of POIs may be searched for the POI nearest to the present position. For this purpose, point coordinates of the POI may be explicitly contained in the data sets, or the distance may be determined, wherein, as an alternative, the distance may be calculated using the centre of the position range for the POI contained in the data sets. Then, the distance of the found nearest POI from the present position is compared with the maximal distance value stored in the table for this POI. If the comparison yields that the distance requirement is satisfied this POI is announced by the beacon. This method secures that the nearest POI is announced if the condition for being announced (location, distance, etc.) holds for more than one POI.
- The distance value in the table of POIs may be a maximum distance, a minimum distance, a distance range given by a maximum and a minimum distance, or even only a point. Furthermore, two or more of such values may exist for an entry of the table, possibly distinguished by direction values, e.g. an angle range of the distance vector between POI and beacon and the direction of movement.
- The beacon may be configured to announce data of a POI in within a distance configured as a constant or a variable parameter into the beacon. In case of the distance being a variable parameter, the allowed distance may be dependent on time and/or position of the beacon. The dependency may defined by a corresponding table and/or a function. Furthermore, the beacon may be configured to select one POI of more than one POI satisfying the criterion to be announced. Such a further criterion may be the closest distance or if the POI is ahead in considering the movement of the beacon, more particularly the mean movement.
- A high power density battery may be used as the power supply of the beacons, e.g. a thionyl type, more exactly a lithium thionyl chloride battery. Thionyl cells provide a high energy capacity and a low self-discharge so that battery change is required once a year or less often, possibly only once a few years, e.g. once every 4 to 5 years.
- Other data formats may be used, e.g. for UUIDs, although formats according to agreed standards are preferred.
- For determining the relative location of the POI with respect to the direction of the movement of the beacon, the tour may be stored in its entirety, possible with a reduced resolution, in the beacon. The direction of movement may be determined by calculating the movement vectors between two points of the tour, with the present position located between the two points. In an extreme case, the two points may be start and end point of the travel. Else the beacon may calculate the direction and speed of the travel using the change of its position, preferably as a mean value calculated over adequate time intervals.
- When the beacon changes from one POI to another, i.e. selects another set of stored data to emit (in particular another UUID), it may perform this transition according to a predetermined protocol. For example, it may stop for a certain wait time sending at all so to simulate the situation of exiting the neighbourhood of a POI, equivalent to leaving the emission range of a stationary, conventional beacon. Once the wait time has passed, it starts sending the data of the other POI, thereby simulating entry into the proximity of this POI. Of course, other such transition procedures may be realized according to the application running on the intended receiving devices.

### Glossary

- **UUID** (universally unique identifier) is a 128-bit value that uniquely identifies one or more beacons as a certain type or from a certain organization.
- **major** value is a 16-bit value that can be used to group related beacons that have the same proximity UUID. Value range is 1-65536.
- **minor** value is a 16-bit value that differentiates beacons with the same proximity UUID and major value. Value range is 1-65536.
- **Region** is a logical set of one or more beacons. Maximum 20 regions can function in the background (of the listening device) even if app is in the background or phone is locked.
- i**Beacon** is the name for Apple's technology standard, which allows Mobile Apps to listen for signals from beacons in the physical world and react accordingly. iBeacon technology allows Mobile Apps to determine their position on a micro-local scale, and deliver hyper-contextual content to users based on location.
- **RSSI** (Received Signal Strength Indicator) is an indication of the power level being received by the antenna. RSSI (dBm) = -20*n*log10(d)+A, d=distance in meters, A=received signal strength in dBm at 1 meter. The doubling of distance corresponds to decrease of RSSI for 6 dB.
- **Bluetooth Smart** (known as Bluetooth low energy) was introduced with the Bluetooth 4.0 specification, and enables a new low power radio. Bluetooth smart enables ultra-low power connectivity and basic data transfer. Typical applications are remote controls, watches, sports equipment, health sensors, home automation, mobile advertising and indoor navigation

## Claims

1. Beacon device (1) for emitting data related to the position of the beacon device, the beacon device comprising a transmitter (9) capable to wirelessly emit the data, **characterized in that** the beacon device further comprises a localisation portion (7) arranged to determine the position of the beacon device and a memory portion (5) containing at least two data sets, wherein each data set is assigned to a position range, and a control portion (3) being arranged to furnish a data set selected on the basis of the position of the beacon device relative to the data sets and to furnish the data set to the transmitter.

2. Beacon device (1) according to claim 1, **characterized in that** the localisation portion (7) is a receiver for wirelessly transmitting positioning data, preferably of a satellite-based system, more preferable of the GPS system or an equivalent system.

3. Beacon device (1) according to one of claims 1 to 2, **characterized in that** the position related data sets each comprise a position range comprising a point of interest, preferably with the point of interest being the gravity centre of the position range, and more preferably a position range substantially constituted by the coordinates of the point or interest, and optionally at least one of:
- at least one distance value indicating at least one distance range relative to the position range, each distance range defining a range for the distance of the beacon from the position range in which the data of the point of interest are considered to match the position of the beacon;
- an indication of a direction of movement of the beacon device marking the data set to be included or excluded if the movement of the beacon device complies with the indication of movement.

4. Beacon device (1) according to one of claims 1 to 3, **characterized in that** the beacon device is configured to check its position and/or its movement relative to the position ranges or the centres of the position ranges defined in the position related data sets and to determine by a criterion, preferably the minimum distance and/or the maximum rate of diminishment of the distance, the data set which is to be furnished to the transmitter (9).

5. Beacon device (1) according to one of claims 1 to 4, **characterized in that** the transmitter (9) has an emission power of at most 0.01 W, preferably at most 0.001, 0.0001, 0.00001, or 0.000001 W with increasing preference.

6. Beacon device (1) according to one of claims 1 to 5, **characterized in that** it is arranged to emit the position related data (17) at most once per 0.1 second, preferably per 0.2 second, more preferably 0.5 s and even more preferably 1 s.

7. Use of the beacon device (1) according to one of claims 1 to 6 for producing position related data, **characterized by** the steps
- determining the present position of the beacon device;
- providing a table (17) comprising at least two data sets, each data set comprising at least a position range to which it is related;
- searching in the table a data set of which the position range and distance value complies with a predetermined proximity condition, preferably is satisfying the condition that the distance between the present position and the position range or the centre of the position range is not greater than the distance for that position range or is in a predefined range, the distance respectively the predefined range being included in the data set;
- if such a data set is found, using the data set to emit a signal comprising position related data.

8. A use according to claim 7, **characterized in that** additionally at least one of the following criteria has to be satisfied by a data set to be selected:
- the distance vector has to be in a predetermined angle range with respect to the travel direction of the beacon device;
- the centre of the position range is to the left or the right of the travel direction.

9. A use according to one of claims 7 to 8, **characterized in that** in case that more than one data set satisfies the proximity condition, at least one of the following criteria is used to select a data set:
- the data set of smallest distance;
- the data set of which the distance decreases with the highest rate.

10. A use according to one of claims 7 to 9, **characterized in that** the position related data comprise at least one of:
- data to be rendered on a receiving device, and
- a datum identifying data to be rendered stored on a remote data host.

11. A use according to one of claims 7 to 10, **characterized in that** at least one of the data sets, preferably the entirety of the data sets, further comprises at least one of:
- Data indicating one or more speeds and/or speed ranges,
- Data indicating at least one direction of movement,
and that the data sets are further searched for a match regarding the speed or speed range and/or of the direction of movement, and a data set is found if speed, speed range and/or direction of movement of the beacon (1) corresponds with respective data of the data set.

12. A use according to one of claims 7 to 11, **characterized in that** emission of data is performed using a low power technology, preferably one satisfying at least one of the following conditions:
- data emission, except data emission excited by devices in the environment, takes place at most once per 0.1 s, preferably 0.2 s and more preferably 0.5 s;
- emission power is at most 0.01 W preferably at most 0.001, 0.0001, 0.00001, or 0.000001 W with increasing preference.

13. A use according to one of claims 7 to 12, **characterized in that** the data sets are transmitted to the beacon by a wireless communication unit comprised in the beacon and stored in the memory portion (5).
